(19) Europäisches Patentamt
European Patent Office
Office européen des brevets

(11) **EP 3 204 802 B1**

(12) **EUROPÄISCHE PATENTSCHRIFT**

(45) Veröffentlichungstag und Bekanntmachung des Hinweises auf die Patenterteilung:
**22.04.2020  Patentblatt 2020/17**

(21) Anmeldenummer: **15797587.1**

(22) Anmeldetag: **07.10.2015**

(51) Int Cl.:
**G02B 5/28** (2006.01)   **G01J 3/26** (2006.01)
**G02B 26/00** (2006.01)

(86) Internationale Anmeldenummer:
**PCT/DE2015/000502**

(87) Internationale Veröffentlichungsnummer:
**WO 2016/055046 (14.04.2016 Gazette 2016/15)**

(54) **RICHTUNGSSELEKTIVER INTERFEROMETRISCHER OPTISCHER FILTER**

DIRECTION-SELECTIVE INTERFEROMETRIC OPTICAL FILTER

DIRECTION SELECTIVE FILTRE OPTIQUE INTERFÉROMÉTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.10.2014  DE 102014014980**

(43) Veröffentlichungstag der Anmeldung:
**16.08.2017  Patentblatt 2017/33**

(73) Patentinhaber: **Technische Universität Dresden**
**01069 Dresden (DE)**

(72) Erfinder:
• **LANGNER, Maik**
**01159 Dresden (DE)**
• **FRÖB, Hartmut**
**01768 Glashütte (DE)**
• **LYSSENKO, Vadim G.**
**01069 Dresden (DE)**
• **SUDZIUS, Markas**
**01069 Dresden (DE)**
• **LEO, Karl**
**01219 Dresden (DE)**

(74) Vertreter: **Kailuweit & Uhlemann Patentanwälte Partnerschaft mbB et al**
**Bamberger Straße 49**
**01187 Dresden (DE)**

(56) Entgegenhaltungen:
**US-A1- 2006 280 512     US-A1- 2007 081 156**
**US-A1- 2013 279 006**

• **G PANZARINI: "Polariton dispersion and polarisation splitting for quantum well excitons in single and coupled microcavities", PHYSICA STATUS SOLIDI A, Bd. 164, 16. Dezember 1997 (1997-12-16), Seiten 91-94, XP055242466,**

## Beschreibung

Die Erfindung betrifft einen richtungsselektiven interferometrischen optischen Filter für spektrometrische Einrichtungen, im Folgenden auch als direktionaler interferometrischer optischer Filter - DIOF bezeichnet.

Materialsysteme, die den Winkel der Lichtausbreitung einschränken, besitzen eine Vielzahl von Anwendungen, u.a.: natürlich wirkende Beleuchtung, Schutz der Privatsphäre (Displays), automatische Bildanalyse, Detektoren und entsprechende Lichtquellen, etc.

Bisherige Lösungen sind komplex im Aufbau (z. B.: photonische 3D-Strukturen) oder besitzen unzureichende Eigenschaften (Sichtschutzfolien: Winkelbereich -30°, Linienstruktur sichtbar).

Im Allgemeinen können solche optischen Eigenschaften durch echte dreidimensionale optische Strukturen abgebildet werden, die eine Bandlücke für eine bestimmte Ausbreitungsrichtung besitzen und zumindest eine diskrete Mode darin besitzen. Typischerweise existieren bei solchen Systemen einige diskrete Moden im Impulsraum. Neben der Tatsache, dass die Herstellung solcher Strukturen technisch sehr anspruchsvoll und unwirtschaftlich ist, beschränkt die Diskretisierung der Moden im Impulsraum die Anwendungsmöglichkeiten.

Die US 6,130,780 A1 offenbart einen omnidirektionalen Reflektor, aufweisend eine Struktur mit einer Oberfläche und einer Brechungsindexveränderung entlang der senkrechten Richtung zur genannten Oberfläche sowie ein Verfahren zu dessen Herstellung.
Die durch die beschriebene Multischichtstruktur hervorgerufene optische Bandstruktur führt bei geeigneter Wahl der Materialien und des konkreten Schichtaufbaus dazu, dass ein Frequenzbereich existiert, bei dem Photonen unter jedem Einfallswinkel polarisationsunabhängig nahezu zu 100% reflektiert werden.

Nachteilig beschreibt die US 6,130,780 A1 jedoch keine Möglichkeit, innerhalb des reflektieren Frequenzbereiches oder -bandes einen schmalen Bereich zu definieren (Richtung sowie die Frequenz des Lichtes), der hindurchgelassen wird.

Der in der Druckschrift US 6,624,945 B2 beschriebene elektromagnetische Wellenlängen-Filter erlaubt die Transmission von elektromagnetischer Energie innerhalb eines schmalen Wellenlängenbereiches bei Reflexion der einfallenden elektromagnetischen Energie anderer benachbarter Wellenlängen, wobei der genannte Filter umfasst: mindestens eine Cavity-Region als Störung, i.d.S. einer Schichtdickenvariation innerhalb eines periodisch aufgebauten Schichtstapels, die zwischen mindestens zwei Reflektoren eingebettet ist, wobei mindestens einer entsprechend der Anmeldung US 6,130,780 A1 ausgebildet sein kann.

Nachteilig gibt es bei diesem Filter keine Richtungsbegrenzung für die Transmission eines festen definierten schmalen Wellenlängenbereiches, d.h. zu jedem Einfallswinkel existiert ein eigener, der Dispersionsbedingung des Filters genügender Transmissionsbereich. Demzufolge kann für die identische Wirkungsweise eine Vorfilterung der Wellenlänge oder der Richtung stattfinden.

Eine weitere Möglichkeit, Schichtstapel aus dielektrischen Materialien zur Filterung verschiedener Wellenlängen zu verwenden, ist in der Druckschrift US 7,310,454 B2 aufgezeigt. Dabei werden zwei photonische Kristalle als Reflektoren um eine sogenannte Defektschicht (äquivalent zu Cavity-Region/Störstelle) platziert. Die photonischen Kristalle werden durch alternierend hoch- und niedrigbrechende Materialien hergestellt, deren optische Schichtdicken $d_i = \lambda/n_i$ i.A. jeweils 1/4 der Entwurfswellenlänge entsprechen. Dabei kennzeichnet $d_i$ die physikalische Schichtdicke der jeweiligen Schicht und $n_i$ deren Brechungsindex. Die Entwurfswellenlänge definiert den gewünschten Arbeitspunkt der Vorrichtung, also beispielsweise den Bereich maximaler Reflexion oder Transmission.

Einen weiteren, stapelbaren Wellenlängenfilter zeigt die Druckschrift US 2013/0279006 A1. Der Filter umfasst eine Abfolge von Single-Cavity-Filtern, die beiderseits eines optischen Fensters angeordnet sind. Eine weitere Anordnung von Single-Cavity-Filtern zeigt die US 2007/0081156 A1.

Bei der in der Druckschrift US 7,810,454 B2 vorgestellten Vorrichtung wird in einer Ausführung ein variabler, schaltbarer Filter bei senkrechter Einkopplung über eine Glasfaser vorgestellt. Dazu wird die Defektschicht aus einem elektrisch o.ä. ansteuerbarem Material ausgebildet. Die Transmissionsmode, also der schmale Wellenlängenbereich, der nahezu ungehindert die Filterstruktur innerhalb des maximal reflektierenden optischen Stopbandes passieren kann, lässt sich dadurch innerhalb gewisser Grenzen innerhalb des elektromagnetischen Spektrums verschieben. Bei vorheriger Einschränkung des möglichen Wellenlängenbereichs und der Richtung (über die Glasfaser) lässt sich damit ein elektrisch steuerbarer optischer Schalter erzeugen. In einer weiteren Ausführung wird ein Summensignal von diskret definierten Wellenlängen über ein System unterschiedlich aufgebauter Filter in seine Bestandteile zerlegt.
Allen diesen Ausführungen ist gemein, dass eine Vorselektion des zu filternden Signals vorgenommen werden muss, bezüglich der Richtung oder der Wellenlänge.

Des Weiteren existieren Schriften, wie u.a. die Druckschrift US 5,719,989 A, die einen idealen Schichtaufbau eines optischen Filters aus dielektrischen Schichten beschreiben, der eine möglichst gleichförmige hohe Transmission in einem breiten Wellenlängenbereich bietet. Dazu ist eine hohe Anzahl von Schichten notwendig (bis zu einigen 100), die mit hoher Präzision aufgebracht werden müssen. Neben dem spektral breiten Transmissionsbereich wird erwartungsgemäß bei dieser Struktur keine Richtungseinschränkung durchgeführt.

Die in Druckschrift US 6,859,321 B2 beschriebene Vorrichtung verwendet als Defektschicht zwischen den beiden Reflektoren, die als photonische Kristalle ausgebildet sind, eine Luftschicht. Da die beiden Reflektoren jeweils auf einer Seite einer Art Plattenkondensator aufgebracht sind, kann deren Abstand durch elektrostatische Anziehung variiert werden. Da der Abstand einige $\mu$m beträgt, gibt es innerhalb des reflektierten Wellenlängenbereichs eine ganze Reihe transmittierter Moden. Zusätzlich fehlt die Richtungseinschränkung.

In der Druckschrift DE 10 2005 042 952 B3 wird ein Mikroresonator, also eine Struktur aus zwei Reflektoren und einer Defektschicht, zur Erzeugung von Intensitätsmodulationen von Strahlung mit Frequenzen im THz-Bereich verwendet. Der Einsatz von dielektrischen Schichtstapeln erlaubt dabei eine kostengünstige Herstellung und die monolithische Bauweise ein kompaktes und robustes optisches Element. Die Intensitätsmodulation entsteht dabei durch optische Anisotropie innerhalb der Defektschicht.

Die US 6,115,401 A schließlich beschreibt die Verwendung eines Filterelements aus dielektrischen Schichtstapeln zur Filterung resonanter Moden in einem externen Laser-Resonator. Dabei wird der auf ein Prisma aufgebrachte Filter im Strahlengang variabel einstellbar (lateral/winkel-) eingesetzt. Auch hier werden die allgemeingültigen Dispersionseigenschaften eines Mikroresonators insofern ausgenutzt, dass bei einer gegebenen Wellenlänge innerhalb des reflektierten Wellenlängenbereichs ein Winkel vorgegeben ist oder bei vorgegebenem Winkel die transmittierte Wellenlänge, nicht jedoch beides in Kombination.

Einen Dispersionsfilter, bei dem definierte Dispersionseigenschaften einstellbar sind, zeigt die US 2006/0280512 A1. Der Dispersionsfilter umfasst eine Reihe optischer Resonatoren. Aufgrund der optischen Kopplung der Resonatoren weist ein solcher Filter allerdings keine konstanten, einstellbaren Dispersionseigenschaften auf. Um diesen Effekt abzumildern, ist der für Transmission konfigurierte Filter so gestaltet, dass die Grenzfläche zwischen den Resonatoren, die dem Mittelpunkt des Filters am nächsten ist, die maximale Reflektivität aller Grenzflächen aufweist, und die Reflektivitäten der übrigen Grenzflächen beiderseits des Mittelpunkts graduell abnehmen.

Eine mathematische Beschreibung der Dispersion von Quasiteilchen in einer einzelnen und in gekoppelten Mikrokavitäten kann Panzarini, G.: "Polariton dispersion and polarisation splitting for quantum well excitons in single and coupled microcavities". Physica Status Solidi A, Bd. 164 (1997), S. 91-94, entnommen werden.

Der Erfindung liegt die Aufgabe zugrunde, einen richtungsselektiven interferometrischen optischen Filter anzugeben, der derart geeignet ausgebildet ist, dass er einen kompakten, in größeren Mengen einfach herstellbaren Filter darstellt, der in Abhängigkeit von der konkret gewählten Struktur ein Lichtsignal spektral breitbandig (einige 100 nm) vollständig reflektiert und nur innerhalb eines eingestellten eingeschränkten Winkelbereiches (5° bis 10°) ein spektral schmales (2 nm bis 5 nm) Wellenlängen-Band passieren lässt. Bei einer punktförmigen Lichtquelle beschreibt der transmittierte Wellenlängenbereich im Raum je nach gewähltem Aufbau des Filters einem Kegelmantel mit genau definiertem Öffnungswinkel, bis hin zum Grenzfall 0°.

Die Aufgabe der Erfindung wird gelöst durch einen richtungsselektiven interferometrischen optischen Filter, der zumindest umfasst eine Anordnung von zwei geschichtet ausgebildeten eindimensionalen photonischen Strukturen, wobei jede der beiden Strukturen eine Defektschicht enthält, wobei jede photonische Struktur eine Dispersionsfunktion f1, f2 im Energie-Impulsraum E, $k_x$, $k_y$ besitzt, wobei $k_x$ und $k_y$ die Impuls-Komponenten transmittierter Photonen der photonischen Strukturen für eine definierte Energie E im Energie-Impulsraum E, $k_x$, $k_y$ darstellen, wobei beide photonischen Strukturen sich gegenüberliegende Grenzflächen aufweisen, die zueinander einen planparallelen Abstand aufweisen, wobei die beiden photonischen Strukturen voneinander entkoppelt sind, wobei gemäß dem Kennzeichenteil des Patentanspruchs 1 sich die Dispersionsfunktionen f1, f2 beider photonischer Strukturen im Energie-Impulsraum E, $k_x$, $k_y$ kreuzen oder schneiden und eine Schnittmenge A von Lichtstrahlen von Wellen auf den Oberflächen der Dispersionsfunktionen f1, f2 bei einer bestimmten Energie E erzeugen, wobei ein Lichtstrahl aus der Schnittmenge A von Wellen unter einem Winkel durch den Filter selektiv ausgewählte Wellen enthält, während andere Wellen unter anderen Winkeln vom Filter reflektiert werden.

In dem planparallelen Abstand zwischen den sich gegenüberliegenden Grenzflächen kann sich optional ein Distanzstück oder ein Medium, z. B. in Form eines Luftraumes oder -polsters, befinden, das an den Grenzflächen der photonischen Strukturen anliegt. Der planparallele Abstand zwischen den Grenzflächen beim gasförmigen Medium kann z. B. durch Abstandhalter erzeugt werden.

Der erfindungsgemäße Filter kann umfassen zwei geschichtete eindimensionale photonische Strukturen, wobei die zwei Strukturen jeweils zumindest zwei reflektierende Spiegelschichten aufweisen und wobei die zwei Spiegelschichten einer photonischen Struktur durch mindestens eine Defektschicht miteinander verbunden sind und ein Distanzstück oder Medium, das die beiden photonischen Strukturen planparallel mit einem festen Abstand verbindet und kohärent entkoppelt, wobei die durch die zwei photonischen Strukturen hervorgerufenen Dispersionsparabeln für resonante Moden allgemein $k_{x1}^2 + k_{y1}^2 = \text{const\_1}$, wobei $k_{x1}$ und $k_{y1}$ die Impuls-Komponenten transmittierter Photonen für die erste Schichtstruktur bezeichnen, und $k_{x2}^2 + k_{y2}^2 = \text{const\_2}$, wobei $k_{x2}$ und $k_{y2}$ die Impuls-Komponenten transmittierter Photonen für die zweite Schichtstruktur bezeichnen, erfüllen, wobei die Funktionen $k_{x1}^2 + k_{y1}^2 = \text{const\_1}$ und $k_{x2}^2 + k_{y2}^2 = \text{const\_2}$ für eine gewählte Energie E einen Schnittbereich A der Paraboloid-Bereiche - einen Winkelschnittbereich ergeben (äquivalent const\_1 = const\_2), bei dem ein Strahlengang A bei unter einem Winkel einfallenden Wellen richtungsselektiv durch den Filter hindurchgelassene Wellen aufweist.

Der erfindungsgemäße richtungsselektive interferometrische optische Filter bezeichnet im Sinne der Erfindung ein einstückiges Bauelement/Vorrichtung, das es ermöglicht, aus einem breitbandigen Kontinuum elektromagnetischer Strahlung innerhalb des UV/VIS- bis IR-Bereichs einen schmalen Bereich von wenigen nm auszuwählen, der das Bauelement bei Auftreffen innerhalb eines schmalen Winkelbereiches von 5°-10° nahezu ungehindert passieren kann, während der Rest des Spektrums omnidirektional nahezu vollständig reflektiert wird.

Das Wirkprinzip ist dabei interferometrisch, d.h. die optischen Eigenschaften (Transmission/Reflexion, Phasenverhalten) der Vorrichtung entstehen aus der mehrfachen Überlagerung von Teilwellen und deren gegenseitiger partieller Auslöschung und Verstärkung.

Erfindungsgemäß bezeichnen photonische Strukturen eine Anordnung von zumeist mindestens in Abschnitten regelmäßigen, bzw. eine räumliche / geometrische Periodizität aufweisenden Materialien, Metamaterialien oder Mikrostrukturen, die mit Photonen wechselwirken. Diese können natürlich vorkommen (z. B.: Schmetterlingsflügel) oder künstlich erzeugt werden (z. B.: Antireflexionsschichten bei Brillen). Ein typisches Merkmal ist die Variation einer Eigenschaft (z. B.: opt. Brechungsindex) entlang mindestens einer Raumrichtung in der Größenordnung der Lichtwellenlänge, d.h. einige 10 nm - einige 100 nm.

Da sich durch die Regelmäßigkeit/Periodizität eine Analogie zur Behandlung von Kristallstrukturen in der Festkörpertheorie ergibt, werden photonische Strukturen auch als photonische Kristalle bezeichnet. Dabei kennzeichnet die Dimensionalität die Anzahl an Raumrichtungen, die photonisch wirksame Variationen besitzen, d.h. ein eindimensionaler photonischer Kristall ist nur in einer Raumrichtung (z. B. nach oben) mit einer Brechungsindexänderung versehen, während die beiden anderen Raumrichtungen (in der Ebene) keine Variation aufweisen.

Geschichtete Strukturen im Sinne der Erfindung bezeichnen eine Abfolge von miteinander verbundenen Materialschichten (z. B.: Metalloxide, Metalle, Polymere, organische Moleküle etc.), die jeweils eine flächige Ausdehnung von wenigen mm$^2$ bis mehreren 100 cm$^2$ und eine konstante Dicke in der Größenordnung weniger 10 nm bis einige 100 nm besitzen, wobei zwischen jeweils zwei Materialien genau eine Grenzfläche entsteht, deren Ausdehnung unwesentlich davon abweicht. Die aufeinanderfolgenden Grenzflächen in einer photonischen Struktur mit mehr als zwei Schichten sind zueinander planparallel. Durch das Größenverhältnis ihrer Ausdehnungen werden die Schichten auch als Filme bezeichnet.

Herstellungsverfahren für diese Filme können alle Verfahren des Standes der Technik, wie bspw. Vakuumsublimation, Sputterverfahren, Schleuderverfahren, Tauchmethoden, sein.

Eine reflektierende Spiegelschicht im Sinne der Erfindung stellt eine hochreflektive photonische Struktur, auch als dielektrischer Spiegel bezeichnet, dar, bei dem über Interferenzeffekte ein hoher Anteil an Strahlung (nahezu 100%) innerhalb eines spektral breiten Bandes (einige 10 nm - einige 100 nm) vollständig reflektiert wird. Im Unterschied zu metallischen Spiegeln ist der Wirkungsgrad nahezu 100%, da i.d.R. keine oder nahezu keine Strahlung absorbiert wird. Ein einfach gestalteter dielektrischer Spiegel besteht aus einer alternierenden Abfolge von Schichten aus für den betrachteten Wellenlängenbereich transparenten Materialien, die sich in ihrem jeweiligen Brechungsindex voneinander unterscheiden. Im sichtbaren Spektrum sind dies beispielsweise die Materialien Siliziumdioxid (n_SiO2 = 1,46) und Titandioxid (n_TiO2 = 2,4 - 2,6), die auf jeweils eine optische Dicke n x d von einem Viertel der maximal zu reflektierenden Wellenlänge eingestellt werden. Bei einer Anzahl von etwa sieben bis neun alternierenden Schichtpaaren können Reflexionswerte >99% erhalten werden. Für Anpassungen des konkreten Reflexionsverhaltens in einem breiten Spektralbereich von mehreren 100 nm können zusätzliche Schichten oder Schichtstapel mit genau berechneten Schichtdickenabweichungen hinzugefügt werden.

Eine Defektschicht im Sinne der Erfindung bezeichnet eine Störung innerhalb des photonischen Kristalls. Ein idealer Kristall besitzt einen regelmäßig, sich periodisch wiederholenden räumlichen Aufbau. Eine Störung der Periodizität wird als Defekt bezeichnet, übertragen auf eine Schichtstruktur liegt also z. B. eine Störung der regelmäßigen Material- und/oder Dickenanordnung vor. Diese Störung kann beispielsweise bei einem wie oben beschriebenen dielektrischen Spiegel das Ersetzen einer Schicht der optischen Dicke eines Viertels der Wellenlänge durch eine solche mit der Hälfte der Wellenlänge umfassen.

Ein Distanzstück oder ein Medium im Sinne der Erfindung bezeichnet sowohl feste Körper mit mindestens zwei flächig ausgebildeten, zueinander planparallel ausgerichteten Seiten, die für die zu filternde Lichtwellenlänge ausreichend transparent sind, dies können beispielsweise Glasplatten, Polymerschichten, Halbleiterplatten o.ä. sein. Andererseits kann sich auch ein gasförmiges oder flüssiges Medium zwischen den beiden photonischen Strukturen befinden, solange diese einen planparallelen festen Abstand zueinander besitzen. Realisiert werden kann dies beispielsweise durch regelmäßig eingebrachte Abstandshalter.

Eine Dispersionsparabel im Sinne der Erfindung bezeichnet die Beschreibung des Verlaufs der Dispersionsrelation oben beschriebener photonischer Strukturen mit Defektschicht. Allgemein beschreibt die Dispersionsrelation den Zusammenhang zwischen der Energie (Frequenz/Wellenlänge) und dem Impuls von Photonen (ergo deren Richtung). Während es sich bei wechselwirkungsfreien Photonen im Vakuum um eine linear ansteigende Gerade (bei Fixierung einer Impulskomponente im E-$k_x$-$k_y$-Raum einen Kegel) handelt, ruft die photonische Struktur mit Defektschicht eine Parabelform hervor.

Eine resonante Mode im Sinne der Erfindung bezeichnet eine Eigenschwingung der photonischen Stuktur, hervorgerufen durch die Defektschicht. Sie äußert sich beispielsweise durch eine schmalbandige hohe Transmission und ist unter anderem durch die räumliche Ausdehnung und Zusammensetzung der Defektschicht spektral einstellbar. Eine photonische Struktur kann mehr als eine resonante Mode besitzen, in der Regel werden diese bei der Planung und Realisierung der Struktur so eingestellt, dass sie sich spektral zentral in dem Bereich befinden, den die dielektrischen Spiegel maximal reflektieren.

Für jede Betrachtungsrichtung unterhalb der Bedingungen von Totalreflexion an einer Grenzschicht verschiebt sich entsprechend der Dispersionsrelation eine resonante Mode hin zu höheren Energien.

Ein Schnittbereich von Paraboloid-Bereichen im Sinne der Erfindung entsteht dadurch, dass die Dispersionsfunktionen f2 von zweiter photonischer Struktur und f1 von erster photonischer Struktur derart gestaltet sind, dass f2 eine weiter geöffnete Parabel im Energie-Impulsraum $E$-$k_x$-$k_y$ beschreibt, deren Scheitelpunkt energetisch oberhalb des Scheitelpunktes von f1 liegt oder mit diesem zusammenfällt. Der Abstand muss so gewählt sein, dass der Schnittbereich der Impulskomponenten der Photonen noch unterhalb der Bedingungen für Totalreflexion liegt. Im Grenzfall des Zusammenfallens von Scheitelpunkt f1 mit Scheitelpunkt f2 folgt daraus, dass beide photonischen Strukturen senkrecht einfallendes Licht transmittieren, schräg einfallendes Licht aber entweder f1 oder f2 nicht genügt und damit reflektiert wird.

Bei einer Ausbildung des Mediums als schichtförmige Distanzschicht ist die Distanzschicht zwischen den sich gegenüberliegenden Grenzschichten der beiden photonischen Strukturen angeordnet, die an den beiden sich gegenüberliegenden Oberflächenseiten des schichtförmigen Distanzstückes angebracht sind.

Es ist kann mindestens ein Substrat, das mit mindestens einer der photonischen Strukturen in flächigem Kontakt steht, vorhanden sein.

Das Distanzstück kann ebenfalls eine Schicht darstellen.

Die geschichtet ausgebildete eindimensionale photonische Struktur besteht aus mindestens zwei von abwechselnd angeordneten und reflektierende dielektrische Spiegelschichten darstellenden dielektrischen Materialschichten, wobei die Materialschichten verschiedene dielektrische Eigenschaften über das ganze Arbeitsspektrum des Filters haben, wobei die Dicke D der Materialschichten derart ausgebildet sind, dass sie einen optischen Sperrbereich um eine vorgegebene Filtermode hervorrufen.

Eine geschichtet ausgebildete eindimensionale photonische Struktur in Form eines photonischen Kristalls hat zumindest eine Defektschicht, die eine Verstärkung der vorgegebenen Filtermode ergibt, wobei eine Defektschicht sich zwischen zwei dielektrischen Spiegeln, die als dielektrische Materialschicht mit vorgegebenem Brechungsindex ausgebildet sind, befindet.

Die Defektschicht kann sowohl entweder eine festgelegte optische Dicke d oder eine variable optische Dicke d aufweisen.

Die Defektschichten innerhalb von zwei geschichteten eindimensionalen photonischen Strukturen können unterschiedliche Brechungsindizes besitzen.

Die optischen Dicken d von Defektschichten innerhalb von zwei geschichteten eindimensionalen photonischen Strukturen können die gleiche optische Dicke d haben oder sich durch ein ganzzahliges Vielfaches von einer halben Wellenlänge unterscheiden oder abweichend von diesen Werten ausgebildet sein.

Das Distanzstück oder Medium als Ausbilder eines planparallelen Abstands zwischen den beiden photonischen Strukturen ist optisch transparent im Zustand der Resonanzfrequenz des richtungsselektiven interferometrischen optischen Filters und weist eine optische Dicke $D_D$ auf. Die optische Dicke $D_D$ steuert den Kopplungsmechanismus beider photonischen Strukturen. Für den Fall, dass sie deutlich kleiner als die Kohärenz-Länge eines einfallenden Lichtstrahlenbündels (LEDs: einige 10 $\mu$m, Laser: mm - km) seitens der Lichtquelle ist, das durch den Filter analysiert wird, sind beide photonische Strukturen kohärent gekoppelt und wirken als ein einzelnes komplexes photonisches System. Dies führt typischerweise zu einer zweifach degenerierten DIOF-Mode und verbreitet die spektrale und richtungsabhängige Resonanz. Dadurch verringert sich die Filterwirkung des Systems deutlich. Ist die optische Dicke $D_D$ größer als die Kohärenzlänge des einfallenden, den Resonanzbedingungen beider photonischer Strukturen genügenden Lichtbündels, sind die beiden photonischen Strukturen voneinander entkoppelt und wirken als zwei unabhängige Systeme. Für die gezeigten Simulationen und Messergebnisse wird letzterer Fall angenommen.

Das Distanzstück/Medium kann mechanische Eigenschaften haben, die eine vorgegebene Arbeitsweise des Filters sichern, wobei das Distanzstück wie ein transparentes Substrat für beide photonische Strukturen eingebaut ist, die jeweils zu beiden Oberflächenseiten des Distanzstücks befestigt sind.

Das Substrat ist optisch transparent im Zustand der Resonanzfrequenz der vorgegebenen Filtermode, zu/nach der der richtungsselektive interferometrische optische Filter hergestellt oder befestigt sein kann.

Zu einer Einrichtung mit dem richtungsselektiven interferometrischen optischen Filter gemäß dem Kennzeichenteil des Patentanspruchs 12 gehört zumindest eine Lichtquelle und ein Detektor, zwischen denen der richtungsselektive interferometrische optische Filter angeordnet ist, wobei der richtungsselektive interferometrische optische Filter derart ausgebildet ist, dass es gibt für den Filter resonante photonische Wellen in passender Ausbreitungsrichtung vor der Wechselwirkung mit dem Filter,
für den Filter resonante photonische Wellen in passender Ausbreitungsrichtung nach der Wechselwirkung mit dem Filter,
für den Filter nicht-resonante photonische Wellen in passender Ausbreitungsrichtung vor der Wechselwirkung mit dem Filter,
für den Filter nicht-resonante photonische Wellen in passender Ausbreitungsrichtung nach der Wechselwirkung mit dem Filter,
für den Filter resonante photonische Wellen in nicht-passender Ausbreitungsrichtung vor der Wechselwirkung mit dem Filter und
für den Filter resonante photonische Wellen in nicht-passender Ausbreitungsrichtung nach der Wechselwirkung mit dem Filter.

Im Vordergrund steht die Ausnutzung interferometrischer Effekte von mindestens zwei über ein Distanzstück verbundenen photonischen Strukturen in Form von photonischen Kristallen. Dabei wird ausgenutzt, dass ein photonischer Kristall ein transparentes Wellenlängen-Band (Mode) mit einer richtungsabhängigen Transmission besitzt (Dispersion), deren Verlauf sowohl vom spezifischen Aufbau als auch von den eingesetzten Materialien und deren optischen Eigenschaften abhängt. Werden nun photonische Kristalle mit unterschiedlichen Dispersionsrelationen kombiniert, dann kann durch gegenseitige Auslöschung des transmittierten Signals bei Nichtübereinstimmung/fehlendem Überlapp beider Dispersionsrelationen erreicht werden, dass der Filter nur in einem schmalen Winkelbereich und in einem schmalen Wellenlängenbereich transparent ist, also am Kreuzungspunkt der Dispersionsverläufe. Alle anderen Richtungen und Spektralbereiche werden zurück in Richtung der emittierenden Lichtquelle reflektiert.

Es kann eine Detektoreinrichtung unter Einsatz des erfindungsgemäßen Filters zumindest aus einem Großflächen-Photodetektor und dem erfindungsgemäßen Filter bestehen, wobei der Filter entweder direkt auf der Oberfläche des Photodetektors aufgebracht oder auch auf dem Photodetektor befestigt ist und der Filter sich zwischen einem Photonen emittierenden Mittel und dem Photodetektor angeordnet befindet.

Die photonischen Strukturen sind derart ausgestaltet, dass sie ähnliche winkelabhängige Dispersionsrelationen besitzen, aber gleichzeitig unterschiedliche Ausbreitungsgeschwindigkeiten in der Ebene senkrecht zur Filternormalen besitzen. Die Grenzfrequenz beider photonischer Strukturen (die niedrigste resonante Frequenz des Systems) wird durch die Dicke der Defektschicht und deren Brechungsindex bestimmt. Auf der anderen Seite hängt die Ausbreitung der Richtungskomponente in der Ebene von der Stärke der Phasenverzögerung in der Umgebung der Defektschicht ab. Dies kann durch die genaue Kontrolle des optischen Schichtaufbaus und der Auswahl der Materialien gesteuert werden.

Dadurch verhält sich der Filter wie eine real ausgebildete dreidimensionale photonische Struktur, obwohl es keine Strukturen in der Ebene gibt und auch eine zusätzliche Verstärkung des elektromagnetischen Feldes im Inneren fehlt.

Weiterbildungen und zusätzliche Ausgestaltungen der Erfindung sind in weiteren Unteransprüchen angegeben.

Die Erfindung wird anhand von Ausführungsbeispielen mittels mehrerer Zeichnungen näher erläutert.

Es zeigt:

Fig. 1	eine schematische Darstellung des Arbeitsprinzips eines erfindungsgemäßen richtungsselektiven interferometrischen optischen Filters,

Fig. 2	eine schematische Darstellung in Seitenansicht des erfindungsgemäßen richtungsselektiven interferometrischen optischen Filters,

Fig. 3	Darstellungen
gemäß Fig. 3a des Verhältnisses zwischen unterschiedlichen Bereichen einer Winkeldispersion und
gemäß Fig. 3b von Strahlengängen in einem Filter in einem allgemeinen Fall,
wenn die Dispersionsabhängigkeiten (Dispersionsfunktionen f1, f2) von eindimensionalen photonischen Strukturen sich bei $k_x^2 + k_y^2 = const.$ befinden,

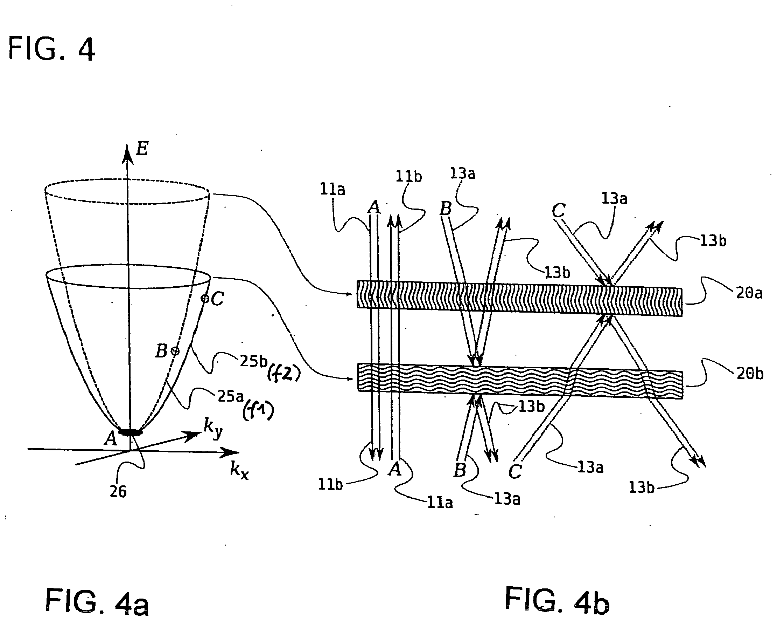

Fig. 4	Darstellungen
gemäß Fig. 4a des Verhältnisses zwischen unterschiedlichen Bereichen der Winkeldispersion und
gemäß Fig. 4b von Strahlengängen in einem Filter mit einem besonderen Fall,
wenn die Dispersionsabhängigkeiten der beiden eindimensionalen photonischen Strukturen sich bei $k_x^2 + k_y^2 = 0$ befinden,

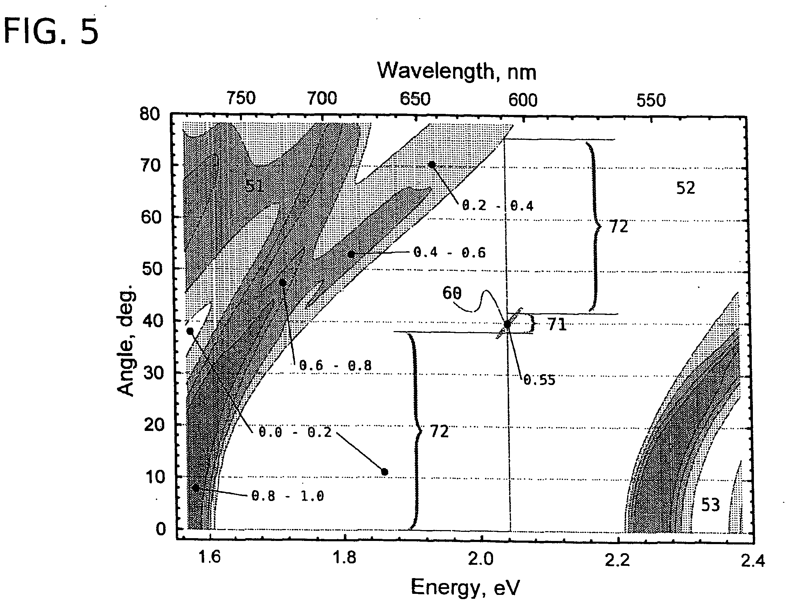

Fig. 5	eine berechnete Transmission des richtungsselektiven interferomettrischen optischen Filters für polarisiertes Licht als eine Funktion der Photonen-Energie und des Ausbreitungswinkels in Luft, wobei der richtungsselektive interferometrische optische Filter derart ausgebildet ist, dass seine Resonanzmode in der Mitte des photonischen Sperrbereiches des Spiegels liegt und einen begrenzten Erfassungswinkel von zwölf Grad aufweist,

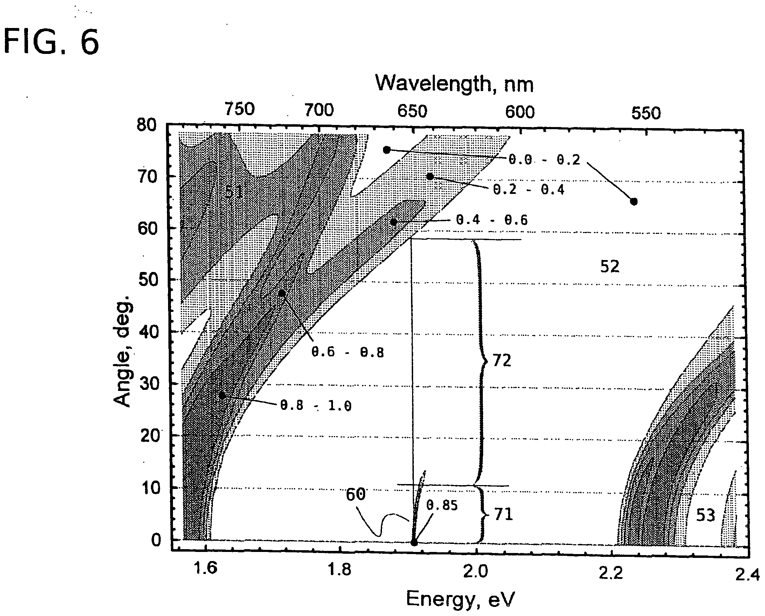

Fig. 6 eine berechnete Transmission des richtungsselektiven interferometrischen optischen Filters für polarisiertes Licht als eine Funktion der Photonen-Energie und des Ausbreitungswinkels in Luft, wobei der richtungsselektive interferometrische optische Filter derart ausgebildet ist, dass seine Resonanzmode bei etwa vierzig Grad liegt und einen Erfassungswinkelbereich von etwa vier Grad hat,

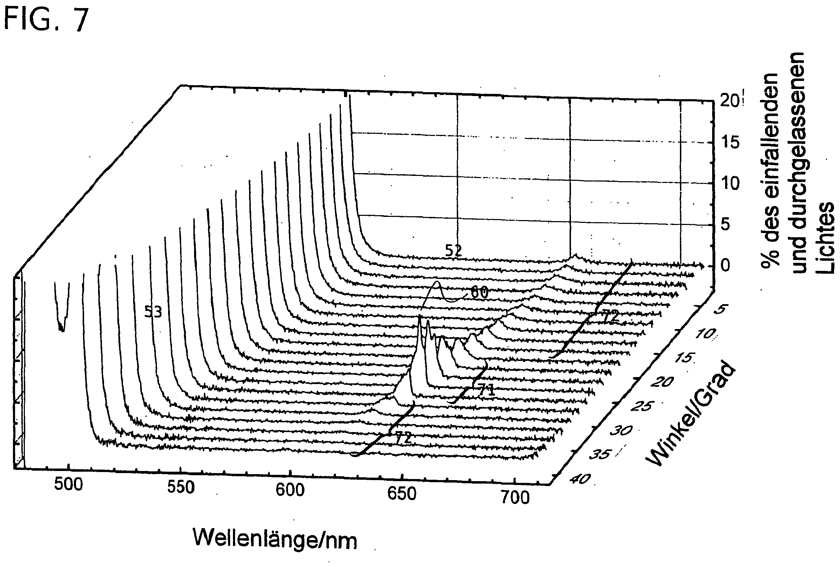

Fig. 7 eine Darstellung einer winkelaufgelösten spektralen Funktion, die mit $SiO_2$/$TiO_2$-Strukturen gemessen wird und auf dem Filter beruht, wobei der Filter derart ausgebildet ist, dass er ein Resonanz-Transmissions-Maximum bei fünfundzwanzig Grad mit einem Akzeptanzwinkel von zehn Grad zeigt und bei allen anderen Winkeln stark gedämpft wird, und

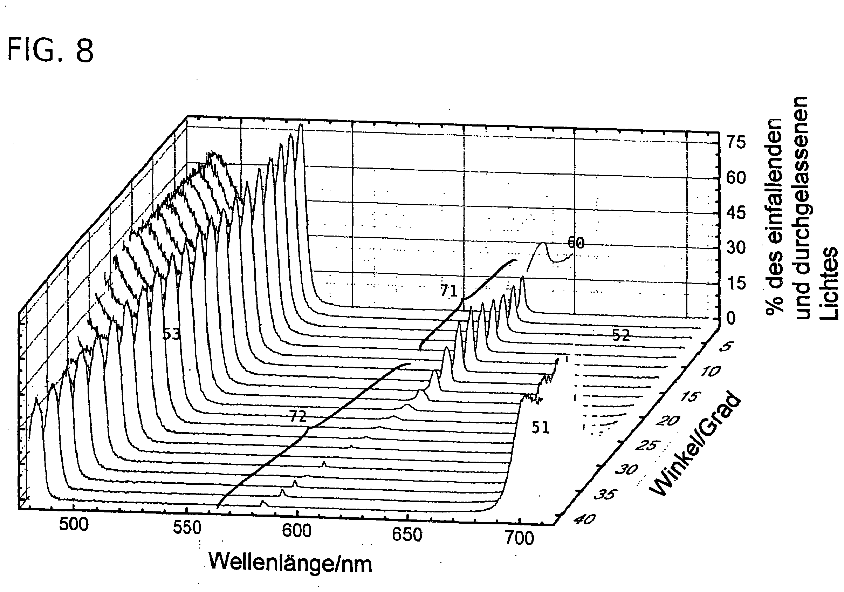

Fig. 8 eine Darstellung einer winkelaufgelösten spektralen Funktion, die mit $SiO_2$/$TiO_2$-Strukturen gemessen wird und auf dem Filter basiert, wobei der Filter derart ausgebildet ist, dass er ein Resonanz-Transmissions-Maximum um null Grad mit einem Akzeptanzwinkel von zwanzig Grad zeigt und bei höheren Winkeln stark gedämpft wird.

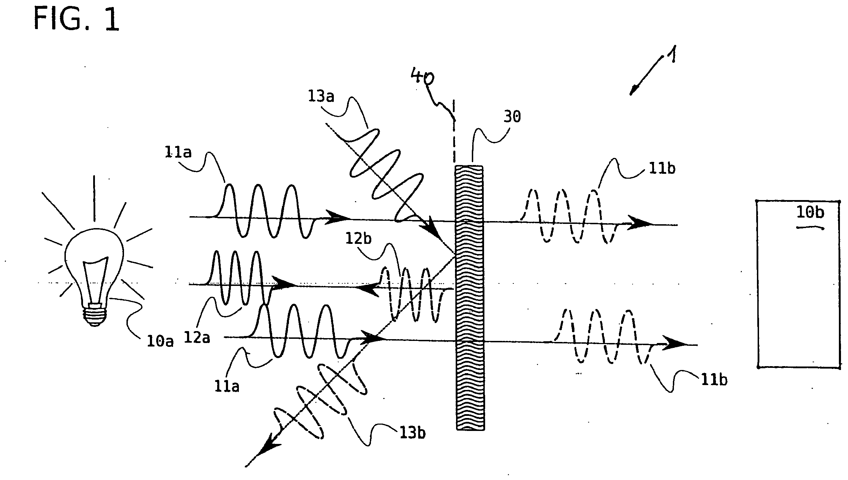

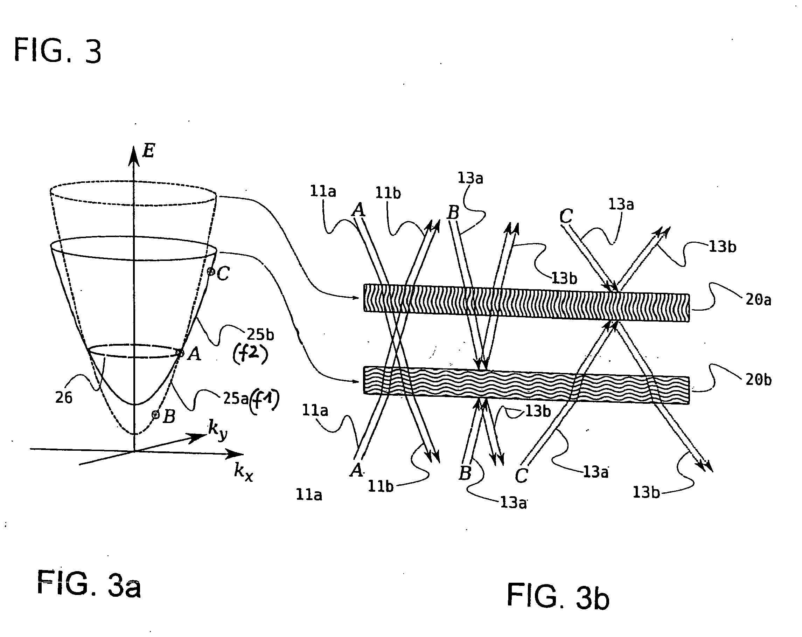

Im Folgenden werden Fig. 1, Fig. 2, Fig. 3 und Fig. 4 gemeinsam betrachtet. In Fig. 1 ist in einem erfindungsgemäßen Ausführungsbeispiel ein richtungsselektiver interferometrischer optischer Filter 30 z. B. für eine spektrometrische Einrichtung 1 gezeigt, dessen Arbeitsprinzip schematisch in Fig. 1 dargestellt ist. Der richtungsselektive interferometrische optische Filter 30 für spektrometrische Einrichtungen umfasst zumindest eine Anordnung von zwei geschichtet ausgebildeten eindimensionalen photonischen Strukturen 36, 37 wobei jede der beiden Strukturen 36, 37 eine Defektschicht 32, 34 enthält, wobei jede photonische Struktur 36, 37 eine Dispersionsfunktion 25a (f1), 25b (f2) im in Fig. 3 dargestellten Energie-Impulsraum E, $k_x$, $k_y$ besitzt, wobei $k_x$ und $k_y$ die Impuls-Komponenten transmittierter Photonen der photonischen Strukturen 36, 37 für eine bestimmte Energie (Frequenz/Wellenlänge) E im Energie-Impulsraum E, $k_x$, $k_y$ darstellen, wobei beide photonischen Strukturen 36, 37 sich gegenüberliegende Grenzflächen 42, 43 aufweisen, die zueinander einen planparallelen Abstand $D_D$ aufweisen.

Erfindungsgemäß kreuzen oder schneiden sich die in Fig. 3 dargestellten Dispersionsfunktionen 25a (f1), 25b (f2) beider photonischer Strukturen 36, 37 im Energie-Impulsraum E, $k_x$, $k_y$, und eine Schnittmenge A von Lichtstrahlen von Wellen wird auf den Oberflächen der Dispersionsfunktionen 25a (f1), 25b (f2) bei einer bestimmten Energie E erzeugt, wobei ein Lichtstrahl aus der Schnittmenge A von Wellen unter einem Winkel durch den Filter 30 hindurch selektiv ausgewählte Wellen 11a, 11b enthält, während andere Wellen 13a, 13b unter anderen Winkeln vom Filter 30 reflektiert werden.

Zur in Fig. 1 dargestellten Einrichtung 1 mit dem richtungsselektiven interferometrischen optischen Filter 30 gehört eine Lichtquelle 10a und ein Detektor 10b, zwischen denen zumindest der richtungsselektive interferometrische optische Filter 30 angeordnet ist.

Der richtungsselektive interferometrische optische Filter 30 ist derart ausgebildet, dass es gibt für den Filter resonante photonische Wellen 11a in passender Ausbreitungsrichtung vor der Wechselwirkung mit dem Filter 30, für den Filter resonante photonische Wellen 11b in passender Ausbreitungsrichtung nach der Wechselwirkung mit dem Filter 30, für den Filter nicht-resonante photonische Wellen 12a in passender Ausbreitungsrichtung vor der Wechselwirkung mit dem Filter 30, für den Filter nicht-resonante photonische Wellen 12b in passender Ausbreitungsrichtung nach der Wechselwirkung mit dem Filter 30, für den Filter resonante photonische Wellen 13a in nicht-passender Ausbreitungsrichtung vor der Wechselwirkung mit dem Filter 30 und für den Filter resonante photonische Wellen 13b in nicht-passender Ausbreitungsrichtung nach der Wechselwirkung mit dem Filter 30.

Nur der senkrecht von der Lichtquelle 10a aus auf den Filter 30 einfallende Photonenstrahl 11 a, beladen mit spezifischer Energie und versehen mit einer vorgegebenen Ausbreitungsrichtung, wird durch den Filter 30 hindurchgelassen. Alle anderen Photonenstrahlen, sogar jene Photonenstrahlen 13a, die die gleiche Energie wie die durchgelassenen Photonenstrahlen 11a haben, aber sich geneigt zur Eintrittsfläche 40 in unterschiedlicher Richtung ausbreiten, werden durch den Filter 30 als Wellen 13b zurück in Richtung zur Lichtquelle 10a hin reflektiert.

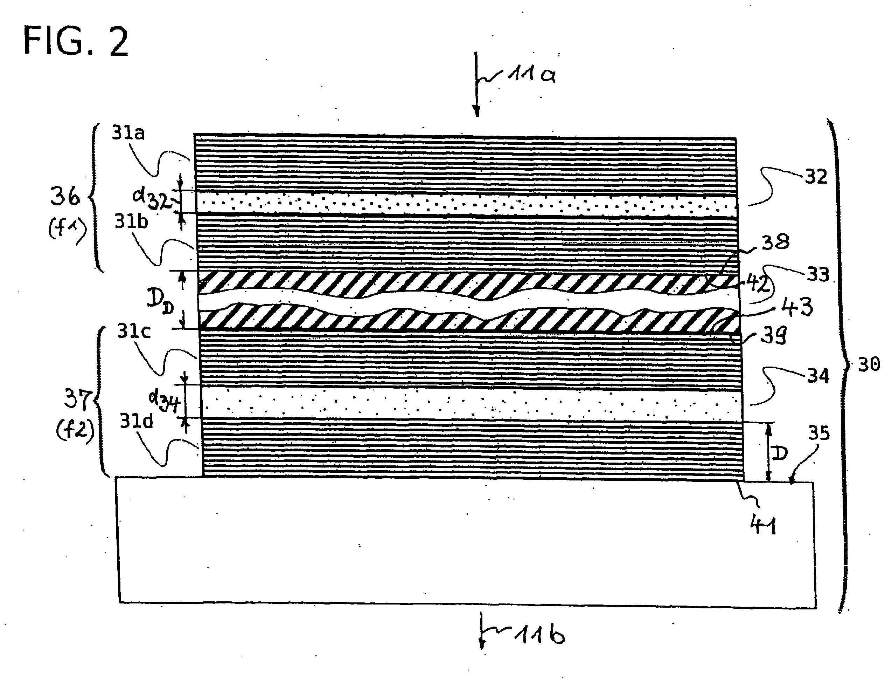

Der Aufbau des erfindungsgemäßen Filters 30 ist beispielhaft schematisch in Fig. 2 dargestellt.

Der richtungsselektive interferometrische optische Filter 30 in Fig. 2 umfasst zumindest eine Anordnung von zwei geschichteten eindimensionalen photonischen Strukturen 36, 37, wobei die eine Struktur 36 zumindest zwei reflektierende Spiegelschichten 31a, 31b und die andere Struktur 37 zumindest zwei reflektierende Spiegel 31c, 31d enthält, ein schichtförmiges Distanzstück 33 mit einer Dicke des Abstandes $D_D$ zur Verbindung der beiden photonischen Stukturen 36, 37, die an den Oberflächenseiten 38, 39 des Distanzstückes 33 sich gegenüberliegend verbindend anliegen.

Wahlweise kann ein Substrat 35, das mit der photonischen Struktur 37 an dessen Außenfläche 41 in unmittelbarem Kontakt steht, angebracht sein.

In Fig. 2 ist damit eine geschichtet ausgebildete eindimensionale photonische Struktur 36, 37, bestehend zumindest aus zwei abwechselnd angeordneten und reflektierende dielektrische Spiegel darstellenden Schichten 31a, 31b; 31c, 31d, dargestellt, wobei zwischen den Spiegelschichten 31a und 31b sowie zwischen den Spiegelschichten 31c und 31d jeweils eine Defekt-Schicht 32, 34 angeordnet ist, wobei die Spiegelschichten 31a, 31b sowie 31c, 31d verschiedene dielektrische Eigenschaften mit unterschiedlichem Brechungsindex über das ganze Arbeitsspektrum der Filters 30 haben und wobei die Dicke D der Spiegelschichten 31a, 31b sowie 31c, 31d derart ausgebildet ist, dass sie eine Vergrößerung eines Sperrbereiches 52 (siehe Fig. 5, 6, 7, 8) um eine vorgegebene Filtermode 60 (siehe Fig. 5, 6, 7, 8) hervorrufen.

Die in Fig. 2 geschichtet ausgebildeten eindimensionalen photonischen Strukturen 36, 37 haben die Defektschicht 32, 34, die eine Verstärkung der vorgegebenen Filtermode 60 (siehe Fig. 5, 6, 7, 8) ergibt, wobei eine Defektschicht 32, 34 sich jeweils zwischen den zwei dielektrischen Spiegelschichten 31a, 31b sowie 31c, 31d, wobei die Spiegelschichten 31a, 31b sowie 31c, 31d jeweils als dielektrische Materialschicht mit vorgegebenem Brechungsindex ausgebildet sind, befindet.

Die Defektschicht 32, 34 kann sowohl entweder eine festgelegte optische Dicke d oder eine variable optische Dicke d aufweisen.

Die eingesetzten Defektschichten 32, 34 können innerhalb der zwei geschichteten eindimensionalen photonischen Strukturen 36, 37 unterschiedliche Brechungsindizes besitzen.

Die optischen Dicken d von Defektschichten 32, 34 können innerhalb von zwei geschichteten eindimensionalen photonischen Strukturen 36, 37 die gleiche optische Dicke haben oder können sich durch ein ganzzahliges Vielfaches von einer halben Wellenlänge unterscheiden oder abweichend (wenige Prozent) von diesen Werten ausgebildet sein. In Fig. 2 weisen z. B. die Defektschichten 32 und 34 jeweils unterschiedliche Dicken $d_{32}$ und $d_{34}$ auf.

Das Distanzstück 33 zwischen den beiden photonischen Strukturen 36, 37 ist optisch transparent im Zustand der Resonanzfrequenz des Filters 30 und kann eine größere optische Dicke $D_D$ als die Kohärenz-Länge des einfallenden Lichtstrahlenbündels 11a seitens der Lichtquelle 10a haben, das durch den Filter 30 analysiert wird.

Das Substrat 35 ist optisch transparent im Zustand der Resonanzfrequenz der vorgegebenen Filtermode 60, zu/nach der der richtungsselektive interferometrische optische Filter 30 hergestellt oder befestigt wird. Das Substrat 35 ist nicht zwingend erforderlich, kann aber als stabilisierende Halterung des Filters 30 dienen.

Das Distanzstück 33 hat mechanische Eigenschaften, die eine vorgegebene Arbeitsweise des Filters 30 sichern, und ist wie ein transparentes Substrat für beide photonische Strukturen 36, 37 eingebaut, die jeweils zu beiden Oberflächenseiten 38, 39 des Distanzstücks 33 befestigt sind.

Im Folgenden wird die Funktionsweise näher erläutert:
Um den Filter 30 zu realisieren, wird eine Anordnung von photonischen Strukturen 36, 37 in Form von zwei großflächigen eindimensionalen photonischen Kristallen eingesetzt, wobei beide eine Defekt-Schicht 32, 34 enthalten, die jeweils eine Leerstellenschicht darstellen kann. In beiden Strukturen 36, 37 ist das elektromagnetische Feld E gemäß der Fig. 3 und 4 entlang einer Raumrichtung senkrecht zu den Spiegelschichten 31a, 31b sowie 31c, 31d gedämpft ausgebildet und die grundlegende vorgegebene Filtermode 60 (siehe Fig. 5, 6, 7, 8) ist der Beginn des Kontinuums der Photonenmode mit einer Dispersion in der Leerstellenebene.

Nichtsdestotrotz, abhängig von der besonderen Anordnung der eindimensionalen photonischen Kristalle 36, 37, können die korrespondierenden inneren Ebenen-Ausbreitungsvektoren das unterschiedliche Verhalten als eine Funktion eines äußeren Ausbreitungswinkels zeigen und zu unterschiedlichen Dispersionsverhältnissen bezüglich der grundlegenden vorgegebenen Filtermode 60 (siehe Fig. 5, 6, 7, 8) führen. Demzufolge, wenn sich das Licht durch eine Anordnung von zwei derartigen parallel angeordneten photonischen Strukturen 36, 37 ausbreitet, wird das Dispersionsverhältnis für die genannte Anordnung diskret und schränkt die Justage auf einen besonderen Winkel ein. In diesem Sinne verhält sich solch eine Anordnung einfach gleich wie eine reelle 3D-begrenzte optische Anordnung, obwohl es keine reale Innenfläche einer optischen Begrenzung hat und nicht zu einer zusätzlichen Erhöhung eines internen elektromagnetischen Feldes E führt. Jedoch solch eine quasi 3D-beschränkte, eindimensionale Anordnung hat einen sehr deutlichen und erkennbaren Vorteil gegenüber dem reellen 3D-photonischen Kristall. Es sind große Flächen von quasi 3D-photonischen Filtern derart einfach herzustellen, dass die photonischen Strukturen 36, 37 nur über eine Dimension - der kürzesten in der Anordnung - gesteuert werden können.

In Fig. 3 sind Darstellungen gemäß Fig. 3a des Verhältnisses zwischen unterschiedlichen Paraboloid-Bereichen 25a und 25b einer Winkeldispersion von Strahlengängen und gemäß Fig. 3b von Strahlengängen A, B, C in dem Filter 30 in einem allgemeinen Fall, wenn die Dispersionsabhängigkeiten (Dispersionsfunktionen f1, f2) von eindimensionalen photonischen Strukturen 36, 37 sich bei $k_x^2 + k_y^2 = $ const. befinden, angegeben.

Dabei stellen $k_x$ und $k_y$ die Impuls-Komponenten der Photonen in der Ebene dar.

Im Schnittbereich A der Paraboloid-Bereiche 25a und 25b ergibt sich ein Winkelschnittbereich 26, bei dem der Strahlengang A bei unter einem Winkel einfallenden Wellen 11a durch den Filter 30 hindurchgelassene Wellen 11b aufweist.

Der Schnittbereich A von Paraboloid-Bereichen im Sinne der Erfindung entsteht dadurch, dass die beiden in Fig. 3 gezeigten Dispersionsfunktionen f2 von zweiter photonischer Struktur (Kristall) 25b und f1 von erster photonischer Struktur (Kristall) 25a derart gestaltet sind, dass f2 eine weiter geöffnete Parabel im Energie-Impulsraum E, $k_x$, $k_y$ beschreibt, deren Scheitelpunkt energetisch oberhalb des Scheitelpunktes von f1 liegt oder mit diesem zusammenfällt. Der Abstand muss so gewählt sein, dass der Schnittbereich der Impulskomponenten der Photonen noch unterhalb der Bedingungen für Totalreflexion liegt. Im Grenzfall des Zusammenfallens von Scheitelpunkt f1 mit Scheitelpunkt f2 folgt daraus, dass beide photonischen Strukturen (Kristalle) 25a, 25b senkrecht einfallendes Licht transmittieren, schräg einfallendes Licht aber entweder f1 oder f2 nicht genügt und damit reflektiert wird.

Die Fig. 4 zeigen Darstellungen gemäß Fig. 4a des Verhältnisses zwischen unterschiedlichen Bereichen der Winkeldispersion und gemäß Fig. 4b von Strahlengängen A, B, C in dem Filter 30 in einem besonderen Fall, wenn die Dispersionsabhängigkeiten der beiden eindimensionalen photonischen Strukturen sich bei $k_x^2 + k_y^2 = 0$ befinden.

Im Schnittbereich A der Paraboloid-Bereiche 25a und 25b ergibt sich ein Winkelschnittbereich 26 im Bereich der Scheitel der Paraboloid-Bereiche 25a, 25b, bei dem der Strahlengang A bei einfallenden senkrechten Wellen 11a durch den Filter 30 hindurchgelassene Wellen 11b aufweist und als Sonderfall bei senkrechtem Einfall gilt.

In den Fig. 3 und Fig. 4 stellen die photonischen Strukturen 36 und 37 Kristalle dar, wobei die erste photonische Struktur 36 einen ersten großflächigen eindimensionalen photonischen Kristall 20a mit einer ersten Dispersion und die zweite photonische Struktur einen zweiten großflächigen eindimensionalen photonischen Kristall 20b mit einer zweiten Dispersion darstellen.

In der Fig. 5 ist eine berechnete Transmission des richtungsselektiven interferometrischen optischen Filters 30 für polarisiertes Licht als eine Funktion der Photonen-Energie und des Ausbreitungswinkels in Luft gezeigt, wobei der richtungsselektive interferometrische optische Filter 30 derart ausgebildet ist, dass seine Resonanzmode in der Mitte des photonischen Sperrbereiches 52 liegt und einen begrenzten Erfassungswinkel von zwölf Grad aufweist. Zur Berechnung wird die Transfer-Matrix-Methode verwendet. Die Filter in diesem Modell bestehen ausschließlich aus dielektrischen Materialien, welche optisch transparent im sichtbaren Spektrum sind. Die gesamte DIOF-Struktur besteht aus einer Anordnung von Siliziumdioxid ($SiO_2$) - und Titandioxid ($TiO_2$) - Schichten unterschiedlicher Dicke. In dieser Simulation formen dielektrische Mikroresonatoren die eindimensionalen photonischen Strukturen 36, 37 beiderseits des Distanzstücks 33, welches aus einer dicken $SiO_2$ - Schicht besteht. Sämtliche Spiegel sind als DBRs ausgebildet, mit jeweils sieben Schichtpaaren bei einer Entwurfswellenlänge von 650 nm. Die Resonanzschicht (Defektschicht) besteht aus Siliziumdioxid respektive Titandioxid mit einer optischen Schichtdicke (bei 650 nm) von $\lambda/2$ bzw. $\lambda$.

In Fig. 6 ist des Weiteren eine berechnete Transmission des richtungsselektiven interferometrischen optischen Filters 30 für polarisiertes Licht als eine Funktion der Photonen-Energie und des Ausbreitungswinkels in Luft gezeigt, wobei der richtungsselektive interferometrische optische Filter 30 derart ausgebildet ist, dass seine Resonanzmode bei etwa vierzig Grad liegt und der einen Erfassungswinkelbereich 71 von etwa vier Grad hat. In diesem Fall sind die Schichtdicken der Resonanzschichten 2.07 $\lambda/4$ für Titandioxid bzw. 1.93 $\lambda/4$ für Siliziumdioxid. Zusätzlich zu dieser Verstimmung der Grenzfrequenz beider Mikroresonatoren sorgt der deutlich unterschiedliche Brechungsindex beider Strukturen (-2.2 für Titandioxid und -1.46 für Siliziumdioxid bei 650 nm) für eine unterschiedliche Krümmung beider Dispersionsparabeln bei k>0.

Die Fig. 5 und die Fig. 6 zeigen das Niedrigenergie-Seitenband 51 und das Hochenergie-Seitenband 53. Dazwischen befindet sich der Sperrbereich 52. Innerhalb des Sperrbereiches 52 befindet sich der Nichterfassungswinkelbereich 72 und der Erfassungswinkelbereich 71. Der Erfassungswinkelbereich 71 beträgt in Fig. 5 etwa zwölf Grad, während der Nichterfassungswinkelbereich 72 in Fig. 5 circa sechsundvierzig Grad und in Fig. 6 der Erfassungswinkelbereich 71 etwa vier Grad und der Nichterfassungswinkelbereich 72 in Bereichsform 72a etwa achtunddreißig Grad und in Bereichsform 72b etwa 33 Grad betragen.

In Fig. 6 befindet sich der Erfassungsbereich 71 mit etwa vier Grad zwischen den beiden 72c und 72 b. In dem Erfassungsbereich 71 ist auch die Filtermode 60.

In Fig. 7 ist eine Darstellung einer winkelaufgelösten spektralen Funktion gezeigt, die mit $SiO_2/TiO_2$-Strukturen 36 und 37 gemessen wird und auf dem erfindungsgemäßen Filter 30 beruht, wobei der Filter 30 derart ausgebildet ist, dass er ein Resonanz-Transmissions-Maximum bei etwa fünfundzwanzig Grad mit einem Akzeptanzwinkel von zehn Grad zeigt und bei allen anderen Winkeln stark gedämpft wird,

In Fig. 8 ist eine Darstellung einer winkelaufgelösten spektralen Funktion gezeigt, die mit $SiO_2/TiO_2$-Strukturen 36 und 37 gemessen wird und auf dem Filter 30 basiert, wobei der Filter 30 derart ausgebildet ist, dass er ein Resonanz-Transmissions-Maximum rund um Null Grad mit einem Akzeptanzwinkel von zwanzig Grad zeigt und bei höheren Winkeln stark gedämpft wird,

Es gibt einen weiten Bereich von unterschiedlichen Anwendungsmöglichkeiten, die ausschließlich auf der Betriebsweise des erfindungsgemäßen Filters 30 basieren. Z. B. zur Herstellung von Großflächen-Filtern mit kleinem Aufnahmewinkel der vorgegebenen Filtermode schränkt er die Kreissymmetrie ein, und z. B. dient er zur Steuerung des Großflächen-Filters über einen großen Winkelbereich zum Schutz der Privatsphäre, zur Erhöhung der Empfindlichkeit und zur Fehlererkennung, was die meist vorgesehenen Anwendungen sind.

Dieser Filter besitzt mindestens zwei großflächige photonische Strukturen. Er verhält sich in vielerlei Hinsicht wie ein konventioneller interferometrischer optischer Filter, mit dem Unterschied, dass zusätzlich zur Wellenlängen- und Polarisationsselektivität eine Richtungseinschränkung hinzukommt. Dadurch kann der Filter Photonen, die für einen beschränkten Winkelbereich eine Resonanzbedingung erfüllen, transmittieren, während er effektiv die Ausbreitung unter anderen Winkeln unterdrückt. Die Transmissionsrichtung ist axialsymmetrisch zur Filternormalen und kann präzise eingestellt werden (aktiv oder passiv) durch die Gestaltung der photonischen Struktur. Dies beinhaltet auch den Spezialfall, dass Photonen nur unter senkrechtem Einfall transmittiert werden.

Die Spiegel 31a, 31b; 31c, 31d spielen eine absolut wichtige Rolle für den Filter 30. Exakt betrachtet, müssen sie photonische Strukturen (z. B. dielektrische Spiegel) sein, in die Licht bis zu einer bestimmten Eindringtiefe vordringen kann und dabei eine Phasenverschiebung nach Reflexion erfährt. In den beiden Strukturen 36, 37 muss der Einfluss auf die Phase des Lichtes unterschiedlich sein, was zu der unterschiedlichen Krümmung der Dispersionsrelationen führt. Die Spiegel 31a, 31b; 31c, 31d müssen dabei keine perfekten photonischen Strukturen sein (z. B. Lambda/4 Schichten für eine exakt definierte EntwurfsWellenlänge). Das beste Ergebnis für die Filterwirkung wird erreicht, wenn beide photonischen Strukturen 36, 37 sich unterscheiden und von ihren Idealwerten (z. B.: exakte Vielfache von lambda/4 oder lambda/2) leicht abweichen.

Die Spiegel 31a, 31 b; 31c, 31d werden als Spezialfall verwendet, wenn der Filter (photonische Strukturen und ein optisches Distanzstück) 30 aus zwei planaren dielektrischen Mikroresonatoren besteht.

Die Krümmung kann durch ein bestimmtes Zusammenspiel von Eindringtiefe von Licht in die Spiegel 31a, 31b; 31c, 31d und Phasenverschiebungen kontrolliert werden, wenn das Licht innerhalb der Resonanzschicht oszilliert. Gleichzeitig wird dadurch aber die Dispersionseigenschaft genau genommen nichtparabolisch, weshalb sie kreuzen können.

Wenn die Dicke $D_D$ der Distanzschicht 33 größer als die Kohärenzlänge des Lichtes wird, sind die beiden photonischen Strukturen 36, 37 "kohärent entkoppelt" und der Filter 30 hat nur eine einzelne Resonanz. Für Sonnenlicht bspw., mit einer Kohärenzlänge von einigen $\mu$m reicht ein Distanzstück 33 von z. B. 100 $\mu$m bereits aus, damit der Filter 30 im "kohärent entkoppelten" Regime arbeitet.

## Bezugszeichenliste

1 Einrichtung
10a Photonenemittierendes Mittel/Lichtquelle
10b Photonenerfassendes Mittel/Photodetektor
11a für den Filter resonante photonische Wellen in passender Ausbreitungsrichtung vor einer Wechselwirkung mit dem Filter
11b für den Filter resonante photonische Wellen in passender Ausbreitungsrichtung
nach einer Wechselwirkung mit dem Filter
12a für den Filter nicht-resonante photonische Wellen in passender Ausbreitungs- richtung vor der Wechselwirkung mit dem Filter
12b für den Filter nicht-resonante photonische Wellen in passender Ausbreitungsrichtung nach der Wechselwirkung mit dem Filter
13a für den Filter resonante photonische Wellen in nicht-passender Ausbreitungsrichtung vor der Wechselwirkung dem Filter
13b für den Filter resonante photonische Wellen in nicht-passender Ausbreitungsrichtung nach der Wechselwirkung mit dem Filter
20a Erster großflächiger eindimensionaler photonischer Kristall mit einer ersten Dispersion
20b Zweiter großflächiger eindimensionaler photonischer Kristall mit einer zweiten Dispersion
25a Dispersionsverhältnis eines ersten eindimensionalen Kristalls zur Ausbildung eines Filters
25b Dispersionsverhältnis eines zweiten eindimensionalen Kristalls zur Ausbildung eines Filters
26 Dispersionsverhältnis eines Filters
30 Richtungsselektiver interferometrischer optischer Filter
31a Reflektierende dielektrische Spiegelschicht/dielektrische Materialschicht
31b Reflektierende dielektrische Spiegelschicht/dielektrische Materialschicht
31c Reflektierende dielektrische Spiegelschicht/dielektrische Materialschicht
31d Reflektierende dielektrische Spiegelschicht/dielektrische Materialschicht

32 Erste Defektschicht

33 Distanzstück oder Substrat

34 Zweite Defektschicht

35 Substrat

36 Erste photonische Struktur

37 Zweite photonische Struktur

38 Erste Oberflächenseite

39 Zweite Oberflächenseite

40 Ebene der Eintrittsfläche

41 Außenfläche einer Struktur

42 Grenzfläche der ersten photonischen Struktur

43 Grenzfläche der zweiten photonischen Struktur

51 Niedrigenergie-Seitenband des Filters

52 Sperrbereich

53 Hochenergie-Seitenband des Filters

60 Vorgegebene Filtermode des Filters

71 Erfassungswinkel-Bereich

72 Blindwinkel-Bereich/Nichterfassungswinkel-Bereich

72a Nichterfassungswinkel-Bereich

72b Nichterfassungswinkel-Bereich

D Dicke eines dielektrischen Spiegels/einer dielektrischen Materialschicht

d Dicke einer Defekt-Schicht

$D_D$ Dicke des Distanzstückes/Abstand

A erster Strahlengang

B zweiter Strahlengang

C dritter Strahlengang

f1 Dispersionsfunktion

f2 Dispersionsfunktion

**Patentansprüche**

**1.** Richtungsselektiver interferometrischer optischer Filter (30) für spektrometrische Einrichtungen (1), zumindest umfassend

eine Anordnung von zwei geschichtet ausgebildeten eindimensionalen photonischen Strukturen (36, 37), wobei jede der beiden Strukturen (36, 37) eine Defektschicht (32, 34) enthält, wobei jede photonische Struktur (36, 37) eine Dispersionsfunktion f1 (25a), f2 (25b) im Energie-Impulsraum ($E$, $k_x$, $k_y$) besitzt, wobei $k_x$ und $k_y$ die Impuls-Komponenten transmittierter Photonen der photonischen Strukturen (36, 37) für eine definierte Energie der Photonen $E$ im Energie-Impulsraum ($E$, $k_x$, $k_y$) darstellen,

wobei beide photonischen Strukturen (36, 37) sich gegenüberliegende Grenzflächen (42, 43) aufweisen, die zueinander einen planparallelen Abstand ($D_D$) aufweisen, wobei der planparallele Abstand ($D_D$) die beiden photonischen Strukturen (36, 37) kohärent entkoppelt sind,

**dadurch gekennzeichnet,**

**dass** sich die Dispersionsfunktionen f1 (25a), f2 (25b) beider photonischer Strukturen (36, 37) im Energie-Impulsraum ($E$, $k_x$, $k_y$) kreuzen oder schneiden und eine Schnittmenge (A) von Lichtstrahlen von Wellen auf den Oberflächen der Dispersionsfunktionen f1 (25a), f2 (25b) bei einer bestimmten Energie (E) erzeugen,

wobei ein Lichtstrahl aus der Schnittmenge (A) von Wellen unter einem Winkel durch den Filter (30) hindurch selektiv ausgewählte Wellen (11a, 11b) enthält, während andere Wellen (13a, 13b) unter anderen Winkeln vom Filter (30) reflektiert werden.

**2.** Filter nach Anspruch 1,

**dadurch gekennzeichnet,**

**dass** in dem planparallelen Abstand ($D_D$) zwischen den sich gegenüberliegenden Grenzflächen (42, 43) sich ein Distanzstück (33) oder ein Medium in Form eines Luftraumes oder -polsters befindet, das an den Grenzflächen anliegt, wobei der planparallele Abstand ($D_D$) zwischen den Grenzflächen (42, 43) der photonischen Strukturen (36, 37) beim gasförmigen Medium durch Abstandhalter festgelegt ist.

**3.** Filter nach Anspruch 2,

**dadurch gekennzeichnet,**

**dass** er umfasst

zwei geschichtete eindimensionale photonische Strukturen, wobei die zwei geschichteten eindimensionalen photonischen Strukturen (36, 37) jeweils zumindest zwei reflektierende Spiegelschichten (31a, 31 b; 31c, 31d) aufweisen, wobei die zwei Spiegelschichten (31a, 31b; 31c, 31d) jeweils durch mindestens eine Defektschicht (32, 34) miteinander verbunden sind, und

ein Distanzstück (33) oder Medium, das die beiden photonischen Strukturen (36, 37) planparallel mit einem festen Abstand verbindet und kohärent entkoppelt, wobei die durch die zwei photonischen Strukturen (36, 37) hervorgerufenen Dispersionsparabeln für resonante Moden allgemein

$$k_{x1}^2 + k_{y1}^2 = \text{const\_1 und } k_{x2}^2 + k_{y2}^2 = \text{const\_2}$$

erfüllen,

wobei die Funktionen $k_{x1}^2 + k_{y2}^2 = \text{const\_1}$ und $k_{x2}^2 + k_{y2}^2 = \text{const\_2}$ für eine gewählte Energie einen Schnittbereich (A) der Paraboloid-Bereiche (25a, 25b) - einen Winkelschnittbereich (26) ergeben, bei dem ein Strahlengang (A) bei unter einem Winkel einfallenden Wellen (11a) richtungsselektiv durch den Filter (30) hindurchgelassene Wellen (11b) aufweist.

4. Filter nach Anspruch 1,
   **dadurch gekennzeichnet,**
   **dass** mindestens ein Substrat (35), das mit mindestens einer der photonischen Strukturen (36, 37) in flächigem Kontakt steht, vorhanden ist.

5. Filter nach Anspruch 1,
   **dadurch gekennzeichnet,**
   **dass** die geschichtet ausgebildete eindimensionale photonische Struktur (36, 37) aus mindestens zwei von abwechselnd angeordneten und reflektierende dielektrische Spiegelschichten (31a, 31b; 31c, 31d) darstellenden dielektrischen Materialschichten besteht, wobei die Materialschichten (31a, 31b; 31c, 31d) verschiedene dielektrische Eigenschaften über das ganze Arbeitsspektrum des Filters (30) haben, wobei die Dicke D der Materialschichten (31a, 31b; 31c, 31d) derart ausgebildet sind, dass sie einen optischen Sperrbereich (52) um eine vorgegebene Filtermode (60) hervorrufen.

6. Filter nach Anspruch 1,
   **dadurch gekennzeichnet,**
   **dass** eine geschichtet ausgebildete eindimensionale photonische Struktur (36, 37) in Form eines photonischen Kristalls (20a, 20b) zumindest eine Defektschicht (32; 34) besitzt, die eine Verstärkung einer vorgegebenen Filtermode (60) ergibt, wobei die Defektschicht (32, 34) sich zwischen zwei dielektrischen Spiegelschichten (31a, 31b; 31c, 31d), die als dielektrische Materialschicht mit vorgegebenem Brechungsindex ausgebildet sind, befindet.

7. Filter nach Anspruch 6,
   **dadurch gekennzeichnet,**
   **dass** die Defektschicht (32, 34) sowohl entweder eine festgelegte optische Dicke d oder eine variable optische Dicke d aufweist.

8. Filter nach Anspruch 6 oder 7,
   **dadurch gekennzeichnet,**
   **dass** die Defektschichten (32, 34) innerhalb von zwei geschichteten eindimensionalen photonischen Strukturen (36, 37) unterschiedliche Brechungsindizes besitzen.

9. Filter nach den Ansprüchen 1 und 8,
   **dadurch gekennzeichnet,**
   **dass** die optischen Dicken $d_{32}$, $d_{34}$ von Defektschichten (32, 34) innerhalb von zwei geschichteten eindimensionalen photonischen Strukturen (36, 37) die gleiche optische Dicke mit $d = d_{32} = d_{34}$ haben oder sich durch ein ganzzahliges Vielfaches von einer halben Wellenlänge unterscheiden oder geringfügig abweichend von diesen Werten ausgebildet sind.

**10.** Filter nach Anspruch 6,
**dadurch gekennzeichnet,**
**dass** die Defektschichten (32, 34) als Defekte zumindest Leerstellen aufweisen.

**11.** Filter nach Anspruch 2,
**dadurch gekennzeichnet,**
**dass** das schichtförmige Distanzstück (33) zwischen den beiden photonischen Strukturen (36, 37) optisch transparent im Zustand der Resonanzfrequenz des richtungsselektiven interferometrischen optischen Filters (30) ist und eine größere oder kleinere optische Dicke $D_D$ als die Kohärenz-Länge eines einfallenden Lichtstrahlenbündels (11a) seitens der Lichtquelle (10a) hat, das durch den Filter (30) analysiert wird.

**12.** Filter nach Anspruch 11,
**dadurch gekennzeichnet,**
**dass** das schichtförmige Distanzstück (33) mechanische Eigenschaften hat, die eine vorgegebene Arbeitsweise des Filters (30) sichern, wobei das Distanzstück (33) wie ein transparentes Substrat für beide photonische Strukturen (36, 37) eingebaut ist, die jeweils zu beiden Oberflächenseiten (38, 39) des Distanzstücks (33) befestigt sind.

**13.** Filter nach Anspruch 4,
**dadurch gekennzeichnet,**
**dass** das Substrat (35) optisch transparent im Zustand der Resonanzfrequenz der vorgegebenen Filtermode (60) ist, zu/nach der der richtungsselektive interferometrische optische Filter (30) hergestellt oder befestigt ist.

**14.** Einrichtung (1) mit einem richtungsselektiven interferometrischen optischen Filter (30) nach den Ansprüchen 1 bis 13, mit zumindest einer Lichtquelle (10a) und einem Detektor (10b), zwischen denen der richtungsselektive interferometrische optische Filter (30) angeordnet ist, wobei der richtungsselektive interferometrische optische Filter (30) derart ausgebildet ist, dass es zumindest gibt
für den Filter resonante photonische Wellen (11a) in passender Ausbreitungsrichtung vor der Wechselwirkung mit dem Filter (30),
für den Filter resonante photonische Wellen (11b) in passender Ausbreitungsrichtung nach der Wechselwirkung mit dem Filter (30),
für den Filter nicht-resonante photonische Wellen (12a) in passender Ausbreitungsrichtung vor der Wechselwirkung mit dem Filter (30),
für den Filter nicht-resonante photonische Wellen (12b) in passender Ausbreitungsrichtung nach der Wechselwirkung mit dem Filter (30),
für den Filter resonante photonische Wellen (13a) in nicht-passender Ausbreitungsrichtung vor der Wechselwirkung mit dem Filter (30) und
für den Filter resonante photonische Wellen (13b) in nicht-passender Ausbreitungsrichtung nach der Wechselwirkung mit dem Filter (30).

**15.** Einrichtung nach Anspruch 14,
**dadurch gekennzeichnet,**
**dass**
ein Großflächen-Photodetektor (10b) vorhanden ist, und mit dem Filter (30) eine zusammengefasste Detektoreinrichtung bildet,
wobei der Filter (30) entweder direkt auf der Oberfläche des Photodetektors (10b) aufgebracht oder auf dem Photodetektor (10b) befestigt ist, und wobei sich der Filter (30) zwischen der Lichtquelle (10a) und dem Photodetektor (10b) angeordnet befindet.

## Claims

**1.** A direction-selective interferometric optical filter (30) for spectrometric devices, at least comprising an arrangement of two layered one-dimensional photonic structures (36, 37), wherein each of the two structures (36, 37) contains a defect layer (32, 34), wherein each photonic structure (36, 37) has a dispersion function f1 (25a), f2 (25b) in energy-momentum-space $(E, k_x, k_y)$, wherein $k_x$ and $k_y$ represent the momentum components of transmitted photons of the photonic structures (36, 37) for a specific energy of the photons E in energy-momentum space $(E, k_x, k_y)$, wherein both photonic structures (36, 37) have opposite interfaces (42, 43) at a plane-parallel distance $(D_D)$ from one another, the plane-parallel distance $(D_D)$ being selected such that the two photonic structures (36, 37) are coherently decoupled,
**characterized in that**
the dispersion functions f1 (25a), f2 (25b) of both photonic structures (36, 37) cross or intersect in energy-momentum space (E, $k_x$, $k_y$) and produce an intersection (A) of light beams of waves on the surfaces of the dispersion functions f1 (25a), f2 (25b) at a particular energy (E), wherein a light beam from the intersection (A) of waves contains waves (11a, 11b) selectively chosen through the filter (30) at an angle, while other waves (13a, 13b) are reflected by the filter (30) at other angles.

2. The filter according to claim 1, **characterized in that** within the plane-parallel distance ($D_D$) between the opposite interfaces (42, 43), a distance piece (33) or a medium in the form of an air chamber or air cushion is located, which abuts the interfaces, wherein the plane-parallel distance ($D_D$) between the interfaces (42, 43) of the photonic structures (36, 37) is fixed by spacers in the case of the gaseous medium.

3. The filter according to claim 2, **characterized in that** it comprises two layered one-dimensional photonic structures, each of the two layered one-dimensional photonic structures (36, 37) containing at least two reflective mirror layers (31a, 31b; 31c, 31d), wherein the two mirror layers (31a, 31b; 31c, 31d) are connected with each other by at least one defect layer (32, 34), and
a distance piece (33) or medium, which connects the two photonic structures (36, 37) in a plane-parallel manner at a fixed distance and coherently decouples them,
wherein the dispersion parabolas for resonant modes induced by the two photonic structures (36, 37) generally satisfy

$$k_{x1}^2 + k_{y1}^2 = \text{const\_1 and } k_{x2}^2 + k_{y2}^2 = \text{const\_2,}$$

wherein the functions $k_{x1}^2 + k_{y1}^2 = \text{const\_1}$ and $k_{x2}^2 + k_{y2}^2 = \text{const\_2}$ define an intersection region (A) of the paraboloid regions (25a, 25b) - an angular intersection region (26), in which a beam path (A) for waves (11a) incident at an angle contains waves (11b) transmitted through the filter (30) in a direction-selective manner.

4. The filter according to claim 1, **characterized in that** there is at least one substrate (35) being in areal contact with at least one of the photonic structures (36, 37).

5. The filter according to claim 1, **characterized in that** the layered one-dimensional photonic structure (36, 37) consists of at least two layers of dielectric material arranged in alternation and representing reflective dielectric mirror layers (31a, 31b; 31c, 31d), wherein the material layers (31a, 31b; 31c, 31d) have different dielectric properties over the entire working spectrum of the filter (30), wherein the thickness D of the material layers (31a, 31b; 31c, 31d) is designed such that it creates an optical stopband (52) around a given filter mode (60).

6. The filter according to claim 1, **characterized in that** a layered one-dimensional photonic structure (36, 37) in the form of a photonic crystal (20a, 20b) contains at least one defect layer (32, 34), which results in an amplification of a given filter mode (60), wherein the defect layer (32, 34) is located between two dielectric mirror layers (31a, 31b; 31c, 31d), each being a dielectric material layer with a given refractive index.

7. The filter according to claim 6, **characterized in that** the defect layer (32, 34) has either a fixed optical thickness d or a variable optical thickness d.

8. The filter according to claim 6 or 7, **characterized in that** the defect layers (32, 34) within two layered one-dimensional photonic structures (36, 37) have different refractive indices.

9. The filter according to claims 1 and 8, **characterized in that** the optical thicknesses $d_{32}$, $d_{34}$ of defect layers (32, 34) within two layered one-dimensional photonic structures (36, 37) have the same optical thickness $d = d_{32} = d_{34}$ or differ by an integer multiple of half the wavelength or have minor differences therefrom.

10. The filter according to claim 6, **characterized in that** the defect layers (32, 34) comprise at least vacancies as defects.

11. The filter according to claim 2, **characterized in that** the layer-shaped distance piece (33) between the two photonic structures (36, 37) is optically transparent in the resonance frequency condition of the direction-selective interferometric optical filter (30) and has an optical thickness $D_D$ which is larger or smaller than the coherence length of an incident bundle of light beams (11a) from the light source (10a), which is analyzed by the filter (30).

12. The filter according to claim 11, **characterized in that** the layer-shaped distance piece (33) has mechanical properties that ensure a defined mode of operation of the filter (30), wherein the distance piece (33) is installed as a transparent substrate for both photonic structures (36, 37) respectively attached to both surface sides (38, 39) of the distance piece (33).

13. The filter according to claim 4, **characterized in that** the substrate (35) is optically transparent in the resonance frequency condition of the predetermined filter mode (60) according to which the direction-selective interferometric optical filter (30) is manufactured or attached.

14. A device (1) with a direction-selective interferometric optical filter (30) according to claims 1 to 13, with at least one light source (10a) and one detector (10b), between which the direction-selective interferometric optical filter (30) is arranged, wherein the direction-selective interferometric optical filter (30) is designed in such a way that there are at least

photonic waves (11a) resonant for the filter in a matching propagation direction before interaction with the filter (30),
photonic waves (11b) resonant for the filter in a matching propagation direction after interaction with the filter (30),
photonic waves (12a) non-resonant for the filter (30) in a matching propagation direction before interaction with the filter (30),
photonic waves (12b) non-resonant for the filter (30) in a matching propagation direction after interaction with the filter (30),
photonic waves (13a) resonant for the filter in a non-matching propagation direction before interaction with the filter (30), and
photonic waves (13b) resonant for the filter in a non-matching propagation direction after interaction with the filter (30).

15. The device according to claim 14, **characterized in that** a large area photodetector (10b) is present and forms a combined detector device with the filter (30), wherein the filter (30) is either arranged directly on the surface of the photodetector (10b) or is mounted on the photodetector (10b), and wherein the filter (30) is located between the light source (10a) and the photodetector (10b).

## Revendications

1. Filtre optique interférométrique à direction sélective (30) pour des dispositifs spectrométriques (1), comprenant au moins un agencement de deux structures (36, 37) photoniques unidimensionnelles stratifiées, chacune des deux structures (36, 37) contenant une couche défectueuse (32, 34), chaque structure (36, 37) photonique possédant une fonction de dispersion f1 (25a), f2 (25b) dans l'espace énergie-impulsion $(E, k_x, k_y)$, $k_x$ et $k_y$ représentant les composantes d'impulsion de photons transmis des structures (36, 37) photoniques pour une énergie définie des photons E dans l'espace énergie-impulsion $(E, k_x, k_y)$, les deux structures (36, 37) photoniques présentant des interfaces opposées (42, 43) qui présentent un écart à plan parallèle $(D_D)$ l'une par rapport à l'autre, l'écart à plan parallèle $(D_D)$ étant choisi de sorte que les deux structures (36, 37) photoniques sont découplées de manière cohérente, **caractérisé en ce que** les fonctions de dispersion f1 (25a), f2 (25b) des deux structures (36, 37) photoniques se croisent ou se coupent dans l'espace énergie-impulsion $(E, k_x, k_y)$, et produisent une intersection (A) de rayons lumineux d'ondes sur les surfaces des fonctions de dispersion f1 (25a), f2 (25b) à une certaine énergie (E), un rayon lumineux provenant de l'intersection (A) d'ondes contenant des ondes (11a, 11b) choisies sélectivement à travers le filtre (30) à un certain angle, tandis que d'autres ondes (13a, 13b) sont réfléchies par le filtre (30) à d'autres angles.

2. Filtre selon la revendication 1, **caractérisé en ce qu'**un élément d'espacement (33) ou un milieu sous forme de chambre à air ou de coussin d'air, qui est adjacent aux interfaces, est situé dans l'écart à plan parallèle $(D_D)$ entre les interfaces opposées (42, 43), l'écart à plan parallèle $(D_D)$ entre les interfaces (42, 43) des structures (36, 37) photoniques étant réglé par des écarteurs dans le milieu gazeux.

3. Filtre selon la revendication 2, **caractérisé en ce qu'**il comprend deux structures photoniques unidimensionnelles stratifiées, les deux structures (36, 37) photoniques unidimensionnelles stratifiées présentant respectivement au moins deux couches miroir réfléchissantes (31a, 31b ; 31c, 31d), les deux couches miroir (31a, 31b ; 31c, 31d) étant reliées entre elles respectivement par au moins une couche défectueuse (32, 34), et un élément d'espacement (33) ou un milieu qui relie les deux structures (36, 37) photoniques à plan parallèle d'un écart fixe et qui les découple de manière cohérente, les paraboles de dispersion pour des modes résonants, créées par les deux structures (36, 37) photoniques, satisfaisant généralement $k_{x1}^2 + k_{y1}^2 = \text{const\_1}$ et $k_{x2}^2 + k_{y2}^2 = \text{const\_2}$, les fonctions $k_{x1}^2 + k_{y1}^2 = \text{const\_1}$ et $k_{x2}^2 + k_{y2}^2 = \text{const\_2}$ générant, pour une énergie choisie, une zone d'intersection (A) des zones paraboloïdes (25a, 25b), une zone d'intersection d'angles (26) dans laquelle un trajet de rayons (A) présente des ondes (11b) passant à travers le filtre (30) avec une sélectivité directionnelle pour des ondes (11a) incidentes à un certain angle.

4. Filtre selon la revendication 1, **caractérisé en ce qu'**au moins un substrat (35) est prévu, lequel est en contact dans le même plan avec au moins l'une des structures (36, 37) photoniques.

5. Filtre selon la revendication 1, **caractérisé en ce que** la structure (36, 37) photonique unidimensionnelle stratifiée est constituée d'au moins deux couches de matériau diélectriques représent des couches miroir (31a, 31b ; 31c, 31d) diélectriques réfléchissantes et disposées alternativement, les couches de matériau (31a, 31b ; 31c, 31d) ayant des propriétés diélectriques différentes sur l'ensemble du spectre de travail du filtre (30), l'épaisseur D des couches de matériau (31a, 31b ; 31c, 31d) étant réalisée de manière à créer une zone de blocage (52) optique dans un mode de filtre prédéfini (60).

6. Filtre selon la revendication 1, **caractérisé en ce qu'**une structure (36, 37) photonique unidimensionnelle stratifiée sous forme de cristal photonique (20a, 20b) possède au moins une couche défectueuse (32 ; 34) qui génère un renforcement d'un mode de filtre prédéfini (60), la couche défectueuse (32, 34) étant située entre deux couches miroir diélectriques (31a, 31b ; 31c, 31d) qui sont réalisées sous la forme d'une couche de matériau diélectrique ayant un indice de réfraction prédéfini.

7. Filtre selon la revendication 6, **caractérisé en ce que** la couche défectueuse (32, 34) présente soit une épaisseur optique fixe d, soit une épaisseur optique variable d.

8. Filtre selon la revendication 6 ou 7, **caractérisé en ce que** les couches défectueuses (32, 34) dans deux structures (36, 37) photoniques unidimensionnelles stratifiées ont des indices de réfraction différents.

9. Filtre selon les revendications 1 et 8, **caractérisé en ce que** les épaisseurs optiques $d_{32}$, $d_{34}$ de couches défectueuses (32, 34) dans deux structures (36, 37) photoniques unidimensionnelles stratifiées ont la même épaisseur optique avec $d = d_{32} = d_{34}$, ou diffèrent d'un multiple entier d'une demi-longueur d'onde, ou s'écartent légèrement de ces valeurs.

10. Filtre selon la revendication 6, **caractérisé en ce que** les couches défectueuses (32, 34) présentent au moins des vides comme défauts.

11. Filtre selon la revendication 2, **caractérisé en ce que** l'élément d'espacement (33) formant une couche entre les deux structures (36, 37) photoniques est optiquement transparent dans l'état de la fréquence de résonance du filtre optique interférométrique à direction sélective (30), et a une épaisseur optique $D_D$ supérieure ou inférieure à la longueur de cohérence d'un faisceau de rayons lumineux incident (11a) provenant de la source lumineuse (10a), lequel faisceau est analysé par le filtre (30).

12. Filtre selon la revendication 11, **caractérisé en ce que** l'élément d'espacement (33) formant une couche a des propriétés mécaniques qui assurent un fonctionnement prédéfini du filtre (30), l'élément d'espacement (33) étant monté comme un substrat transparent pour les deux structures (36, 37) photoniques, lesquelles sont fixées respectivement aux deux côtés de surface (38, 39) de l'élément d'espacement (33).

13. Filtre selon la revendication 4, **caractérisé en ce que** le substrat (35) est optiquement transparent dans l'état de la fréquence de résonance du mode de filtre prédéfini (60), substrat sur/selon lequel le filtre optique interférométrique à direction sélective (30) est fabriqué ou fixé.

14. Dispositif (1) comportant un filtre optique interférométrique à direction sélective (30) selon les revendications 1 à 13, comportant au moins une source lumineuse (10a) et un détecteur (10b), entre lesquels est disposé le filtre optique interférométrique à direction sélective (30), le filtre optique interférométrique à direction sélective (30) étant réalisé de sorte qu'il existe au moins des ondes photoniques résonantes (11a) pour le filtre dans une direction de propagation appropriée avant l'interaction avec le filtre (30), des ondes photoniques résonantes (11b) pour le filtre dans une direction de propagation appropriée après l'interaction avec le filtre (30), des ondes photoniques non résonantes (12a) pour le filtre dans une direction de propagation appropriée avant l'interaction avec le filtre (30), des ondes photoniques non résonantes (12b) pour le filtre dans une direction de propagation appropriée après l'interaction avec le filtre (30), des ondes photoniques résonantes (13a) pour le filtre dans une direction de propagation inappropriée avant l'interaction avec le filtre (30) et des ondes photoniques résonantes (13b) pour le filtre dans une direction de propagation inappropriée après l'interaction avec le filtre (30).

15. Dispositif selon la revendication 14, **caractérisé en ce**

- **qu'**un photodétecteur de grandes surfaces (10b) est prévu,
- et forme avec le filtre (30) un dispositif détecteur combiné, le filtre (30) étant soit appliqué directement sur la surface du photodétecteur (10b) soit fixé sur le photodétecteur (10b), et le filtre (30) étant disposé entre la source lumineuse (10a) et le photodétecteur (10b).

EP 3 204 802 B1

FIG. 1

EP 3 204 802 B1

FIG. 2

# FIG. 3

FIG. 3a

FIG. 3b

FIG. 4

FIG. 4a

FIG. 4b

FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6130780 A1
- US 6624945 B2
- US 7310454 B2
- US 20130279006 A1
- US 20070081156 A1
- US 7810454 B2

- US 5719989 A
- US 6859321 B2
- DE 102005042952 B3
- US 6115401 A
- US 20060280512 A1

**In der Beschreibung aufgeführte Nicht-Patentliteratur**

- **PANZARINI, G.** Polariton dispersion and polarisation splitting for quantum well excitons in single and coupled microcavities. *Physica Status Solidi A,* 1997, vol. 164, 91-94